# EUROPÄISCHE PATENTANMELDUNG

(11) **EP 0 810 377 A1**
(43) Veröffentlichungstag der Anmeldung: **03.12.1997**
(21) Anmeldenummer: 97810105.3
(22) Anmeldetag: 27.02.1997
(51) Int. Cl.: F16B 12/14

(54) **Schraubverbindung zum Verbinden von zwei Profilen**

(30) Priorität: 28.05.1996 CH 1330/96
(71) Anmelder: Mangold, Andreas, 4105 Biel-Benken (CH)
(72) Erfinder: Mangold, Andreas, 4105 Biel-Benken (CH)
(74) Vertreter: Eder, Carl E.

(57) **Zusammenfassung**

Bekannte Schraubverbindungen zum internen Verbinden von zwei Profilen (10, 11) besitzen einen zum Einsetzen in die Profile (10, 11) bestimmten Befestigungsstab mit zwei in je eine Anschlussbohrung (13, 14) der Profile (10,11) ragenden Gewindeteilen. Zur Verbindung dienen dabei zwei zum Aufstekken auf die beiden Gewindeteile bestimmte Befestigungsmuttern, die sich fest an die Anschlussbohrungen (13, 14) aufspannen lassen. Diese Art des Festklemmens hat einen wesentlichen Nachteil. So wird das Verschrauben der beiden Befestigungsmuttern dadurch erschwert, dass beim Anspannen die eine Mutter mit einem ersten Schraubenschlüssel festgehalten werden muss, während die andere Mutter mit einem zweiten Schraubenschlüssel angezogen werden kann. Die erfindungsgemässe Schraubverbindung weist diesen Nachteil nicht auf. Diese erlaubt nämlich die Verwendung von nur einer Mutter (7). Damit sich beim Drehen oder Lösen der Mutter (7) der Befestigungsstab (1) nicht dreht, ist der Befestigungsstab (1) an einem Endabschnitt so mit mindestens einer Verengung (4a) versehen, dass eine axial unverschiebbar auf diese Verengung (4a) aufgesteckte Klemmbacke (5) das Verdrehen des Befestigungsstabes (1) verhindert.

## Beschreibung

Die vorliegende Erfindung betrifft einen zum starren Verbinden eines Profils mit einem zweiten Profil dienende Schraubverbindung.

Es sind viele verschiedene Ausführungsformen von Schraubverbindungen für Verlängerungen, Eckverbindungen oder dergleichen. bekannt. Hier ist speziell eine solche Schraubverbindung angesprochen, welche zur internen Verbindung von zwei Profilen, beispielsweise Holz-Profilen, bestimmt ist, welche ihrerseits je eine stirnseitige Bohrung sowie eine in diese Bohrung mündende Anschlussbohrung besitzen und im zusammengesetzten Zustand einen die beiden Anschlussbohrungen miteinander verbindenden Durchgang bilden.

Bekannte Schraubverbindungen zum internen Verbinden von zwei Profilen der vorstehend genannten Art besitzen einen zum Einsetzen in den genannten Durchgang bestimmten Befestigungsstab mit zwei in je eine der beiden Anschlussbohrungen ragenden Gewindeteilen. Zur starren Verbindung der Profile dienen bei dieser Schraubverbindung insbesondere zwei auf die beiden Gewindeteile passende Befestigungsmuttern, die dazu dienen, die beiden Profile lösbar miteinander zu verbinden.

Diese Art des Festklemmens bzw. Verbindens hat nun einen wesentlichen Nachteil. So wird das Verschrauben der beiden Muttern dadurch erschwert, dass beim Anspannen die eine Mutter mit einem ersten Schraubenschlüssel festgehalten werden muss, während die andere Mutter mit einem zweiten Schraubenschlüssel angezogen werden kann.

Der Erfindung liegt nun die Aufgabe zugrunde, eine neue Schraubverbindung für die interne Verbindung von zwei Profilen vorzuschlagen, die den vorgenannten Nachteil nicht aufweist.

Diese Aufgabe wird durch eine Schraubverbindung mit den Merkmalen des Anspruchs 1 gelöst.

Nachfolgend wird anhand der Zeichnung ein Ausführungsbeispiel der Erfindung beschrieben. In der Zeichnung zeigt
die Figur 1 eine Ansicht in Pfeilrichtung I des in der Figur 2 dargestellten Befestigungsstabes,
die Figur 3 eine Stirnansicht einer ersten Klemmbacke,
die Figur 4 eine Ansicht der ersten Klemmbacke in Pfeilrichtung IV der Figur 3,
die Figur 5 eine Stirnansicht einer zweiten Klemmbacke,
die Figur 6 eine Ansicht der zweiten Klemmbacke in Pfeilrichtung VI der Figur 5 und
die Figur 7 zwei mit einer Schraubverbindung der erfindungsgemässen Art verbundene Winkelprofile.

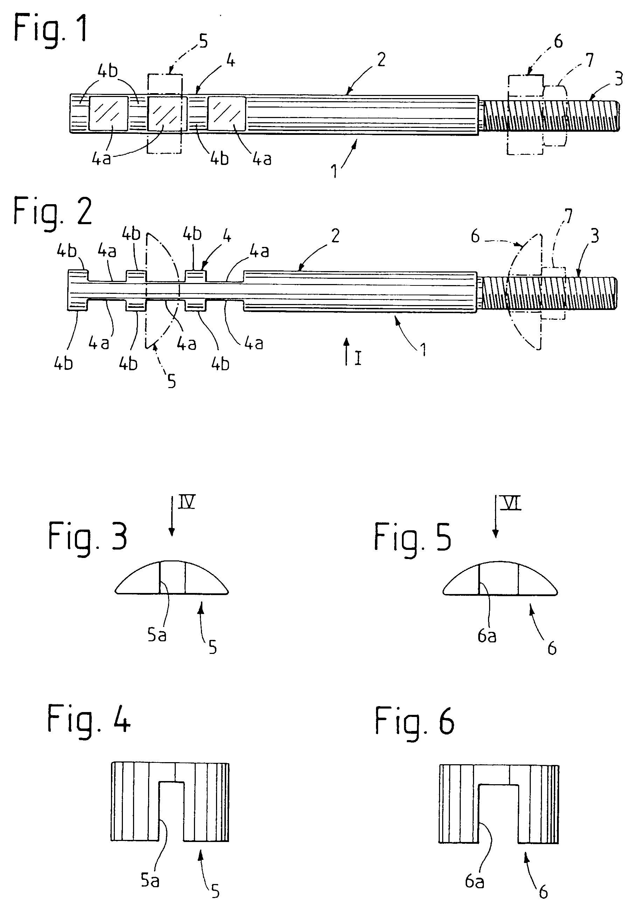

Wie man aus den Figuren 1 bis 7 ersehen kann besteht die erfindungsgemässe Schraubverbindung aus vier Teilen, nämlich aus einem Befestigungsstab 1 mit einem Mittelteil 2, einem Gewindeteil 3 und einem Halteteil 4, zwei Klemmbacken 5 und 6 und einer Mutter 7.

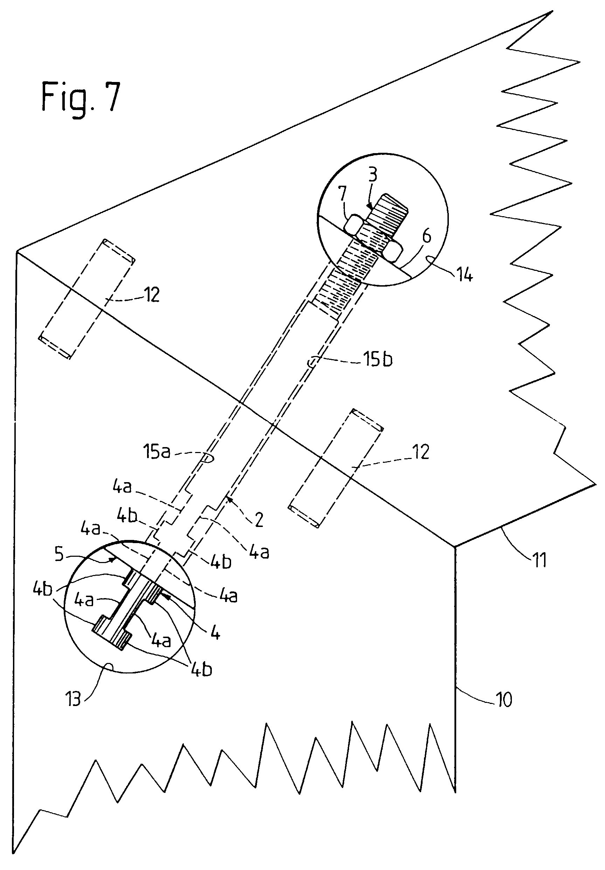

Die in den Figuren 1 bis 6 dargestellten und in der Figur 7 in befestigtem Zustand gezeichneten Einzelteile der Schraubverbindung sind aus metallischem Material, vorzugsweise aus galvanisch verzinktem Stahl, gebildet. Der Befestigungsstab 1 seinerseits hat im wesentlichen eine zylindrische Form und besteht aus einem einstückigen Metallteil.

Wie man insbesondere aus der Figur 7 der Zeichnung ersehen kann, lässt sich die erfindungsgemässe Schraubverbindung etwa in zwei miteinander zu verbindende Winkel-Profile, beispielsweise Holz-Winkel-Profile 10 und 11 einsetzen. Die beiden Profile 10 und 11 besitzen hierzu zwei Befestigungszapfen 12, je eine stirnseitige Bohrung 15a bzw. 15b und je eine senkrecht in diese Bohrung mündende Anschlussbohrung 13 bzw. 14. Die Profile 11 und 12 bilden also im zusammengesetzten Zustand gemeinsam einen die Anschlussbohrungen 13 und 14 miteinander verbindenden Durchgang, so wie das auch für den Einsatz von bereits bekannten Schraubverbindungen vorgesehen ist.

Die starre Verbindung der beiden Profile 10 und 11 mit dem Befestigungsstab 1 wird durch die beiden auf den Befestigungsstab 1 aufsteckbaren Klemmbacken 5 und 6 und die Mutter 7 ermöglicht. Die erfindungsgemässe Schraubverbindung erlaubt also die Verwendung von nur einer Mutter. Damit sich nun beim Drehen oder Lösen der Mutter 7 der Befestigungsstab 1 nicht dreht, ist - wie nachfolgend noch erläutert wird - der Halteteil 4 so mit mindestens einer Verengung und die eine Klemmbacke, nämlich die Klemmbacke 5, so mit einem auf die mindestens eine Verengung passenden Schlitz 5a versehen, dass im zusammengesetzten Zustand der Schraubverbindung sowohl das Verdrehen des Befestigungsstabes 1 als auch eine axiale Verschiebung der Klemmbacke 5 verhindert wird.

Der im wesentlichen zylindrische Halteteil 4 des gezeichneten Ausführungsbeispieles besitzt drei Verengungen 4a mit je zwei zueinander und zur Stab-Längsachse parallelen Flächen. Die Verengungen 4a sind hierbei durch Ausfräsen erzeugbar und weisen jeweils zwei Anschläge auf, so unter anderem die bogenförmigen Anschläge 4b, um die Klemmbacke 5 axial unverschiebbar aufzunehmen.

Wie bereits erwähnt, kämmt der Längsschlitz 5a der ersten Klemmbacke 5 mit jeder Verengung 4a, wobei die im befestigten Zustand auf einer solchen Verengung 4a sitzende Klemmbacke 5 durch die Spannwirkung der angezogenen Mutter 7 gegen die Innenwand der Anschlussbohrung 13 gepresst sowie von dieser und dem äusseren Anschlag 4b der entsprechenden Verengung 4a eingeklemmt wird.

Da der Schlitz 5a der Klemmbacke 5 zum kleineren Längsschnitt der Verengungen 4a passt, lässt sich die Klemmbacke 5 unverdrehbar auf den Halteteil 4 aufstecken. Da darüber hinaus der Halteteil 4 drei Verengungen 4a aufweist, lassen sich mit der erfindungsgemässe Schraubverbindung zudem - und zwar unabhängig von der Länge der Bohrung 15a bzw. 15b - unterschiedlich dimensionierte Profile miteinander verbinden.

Durch die vorstehend beschriebene Konstruktion weist die erfindungsgemässe Schraubverbindung den eingangs geschilderten Nachteil von bekannten Schraubverbindungen nicht auf. So ist die Verspannung der Schraubverbindung mit nur einer Mutter wesentlich einfacher als das Verschrauben mit zwei Muttern.

Zum Verbinden der beiden Profile 10 und 11 mit der erfindungsgemässen Schraubverbindung geht man wie folgt vor: Zuerst führt man den Befestigungsstab 1 in eine Stirnbohrung 15a oder 15b. Dann steckt man die beiden Profile 10 und 11 mit Hilfe der Zapfen 12 und den dazu passenden Bohrungen so zusammen, dass die beiden Stirnbohrungen 15a und 15b den genannten Durchgang bilden. Anschliessend wird in diejenige Anschlussbohrung, in welche der Halteteil 4 hineinragt, bei der hier gezeichneten Ausführungsform also in die Anschlussbohrung 13, die Klemmbacke 5 eingesetzt, und zwar so, dass im aufgesteckten Zustand die zur Anschlussbohrung 13 passende Aussenfläche der Klemmbacke 5 zur Innenwand der Bohrung 13 gerichtet ist. Durch diese kammartige Verzahnung von Halteteil 4 und Klemmbacke 5 wird nun der Befestigungsstab 1 so festgehalten, dass er nicht mehr um seine Längsachse gedreht werden kann. Daraufhin wird die Klemmbacke 6 auf den in die Anschlussbohrung 15 ragenden Gewindeteil 3 aufgesteckt und mit der Mutter 7 festgeschraubt, wobei auch hier die Klemmbacke 6 mit einer - in diesem Fall zum Gewindeteil 3 passenden - Schlitz 6a und einer zur Anschlussbohrung 14 passenden Aussenfläche versehen ist. Beim Festschrauben der Mutter 7 werden nun die beiden Klemmbacken 5 und 6 dicht an die Innenwände der Anschlussbohrungen 13 und 14 gepresst und die Klemmbacke 5 noch zusätzlich von zwei Anschlägen 4b und der Anschlussbohrung 13 eingeklemmt, sc dass dadurch eine starre Verbindung der beiden Profile 10 und 11 entsteht.

Abschliessend sei an dieser Stelle noch darauf hingewiesen, dass die anhand der Figuren 1 bis 7 beschriebene Schraubverbindung nur eine Auswahl von mehreren möglichen Ausführungsformen der Erfindung darstellt und in verschiedener Hinsicht geändert werden kann.

So lassen sich die Dimensionen und Abmessungen sowohl der einzelnen Teile des Befestigungsstabes als auch der Klemmbakken wahlweise und in Abhängigkeit von den Dimensionen der Stirn- und Anschlussbohrungen der miteinander zu verbindenden Profile ändern. Auch ist es denkbar, anstelle von metallischen Klemmbacken auch Klemmbacken aus Kunststoff einzusetzen, oder anstelle der zum Gewindeteil passenden Klemmbacke 6 eine Unterlagsscheibe zu verwenden, sofern dies durch die Geometrie der Anschlussbohrung möglich ist.

Zudem kann der Gewindeteil noch zusätzlich mit einem sich nach aussen verjüngenden konischen Kopf versehen sein, was das Einführen der Mutter auf das Gewinde erleichtert.

Schliesslich kann der Halteteil des Befestigungsstabes nicht nur drei, sondern auch mehr oder weniger, beispielsweise eine, zwei, vier, fünf oder sechs Verengungen bzw. Einfräsungen aufweisen.

## Patentansprüche

1. Schraubverbindung zum internen Verbinden von zwei Profilen (10, 11), die je eine stirnseitige Bohrung (15a, 15b) und eine senkrecht in diese Bohrung mündende Anschlussbohrung (13, 14) aufweisen, wobei die beiden stirnseitigen Bohrungen (15a, 15b) im zusammengesetzten Zustand gemeinsam einen die Anschlussbohrungen (13, 14) miteinander verbindenden Durchgang bilden und wobei zur Schraubverbindung ein durch den Durchgang hindurchführbarer Befestigungsstab (1) mit einem Gewindeteil (3) und eine zum Gewindeteil (3) passende Befestigungsmutter (7) gehört, dadurch gekennzeichnet, dass der Befestigungsstab (1) einen in den genannten Durchgang zu liegen bestimmten Mittelteil (2) besitzt, der den Befestigungsstab (1) in zwei ungleiche Abschnitte teilt, von denen der eine den Gewindeteil (3) und der andere einen Halteteil (4) bildet, dass eine Klemmbacke (5) vorhanden ist, die zum Aufstecken auf den in eine Anschlussbohrung (13) ragenden Halteteil (4) bestimmt ist, dass der Halteteil (4) mindestens einen Anschlag (4b) für diese Klemmbacke (5) besitzt, und dass der Halteteil (4) und die Klemmbacke (5) so ausgebildet und aufeinander steckbar sind, dass im zusammengesteckten Zustand sowohl ein Verdrehen des Befestigungsstabes (1) als auch eine axiale Verschiebung der Klemmbacke (5) verhindert wird.

2. Schraubverbindung nach Anspruch 1, dadurch gekennzeichnet, dass der Befestigungsstab (1) im wesentlichen zylindrisch ist.

3. Schraubverbindung nach Anspruch 2, dadurch gekennzeichnet, dass der im wesentlichen zylindrische Halteteil (4) mindestens zwei Verengungen (4a) mit je zwei zueinander parallelen Flächen besitzt, und dass die Klemmbacke (5) zum Aufstecken auf eine solche Verengung (4a) bestimmt ist, wozu die Klemmbacke (5) mit einem zum kleineren Längsschnitt der Verengung (4a) passenden Schlitz (5a) versehen ist.

4. Schraubverbindung nach Anspruch 3, dadurch gekennzeichnet, dass entlang des Halteteils (4) drei solche Verengungen (4a) vorgesehen sind.

5. Schraubverbindung nach einem der Ansprüche 1 bis 4, dadurch gekennzeichnet, dass sie eine weitere Klemmbacke (6) besitzt, die zum Aufstecken auf den in eine Anschlussbohrung (13) ragenden Gewindeteil (3) bestimmt ist.
